# EUROPÄISCHE PATENTSCHRIFT

(11) **EP 3 069 802 B1**
(45) Veröffentlichungstag und Bekanntmachung des Hinweises auf die Patenterteilung: **07.11.2018**
(21) Anmeldenummer: 15159308.4
(22) Anmeldetag: 17.03.2015
(51) Int. Cl.: B22F 3/04, B22F 3/12, B22F 3/10, B22F 3/15, C22C 1/04, C22C 32/00, B22F 3/17, B22F 3/18, B22F 3/20

(54) **VERFAHREN ZUR HERSTELLUNG EINES BAUTEILS AUS EINEM VERBUND-WERKSTOFF MIT EINER METALL-MATRIX UND EINGELAGERTEN INTERMETALLISCHEN PHASEN**
METHOD FOR PRODUCING A COMPONENT MADE OF A COMPOUND MATERIAL WITH A METAL MATRIX AND INCORPORATED INTERMETALLIC PHASES
PROCÉDÉ DE PRODUCTION D'UN COMPOSANT EN MATÉRIAU COMPOSITE DOTÉ D'UNE MATRICE EN MÉTAL ET DE PHASES INTERCALAIRES INTER-MÉTALLIQUES

(43) Veröffentlichungstag der Anmeldung: 21.09.2016
(73) Patentinhaber: MTU Aero Engines AG, 80995 München (DE)
(72) Erfinder: Smarsly, Wilfried, 81669 München (DE); Fried, Markus, 83626 Valley (DE)

(56) Entgegenhaltungen:
- EP-A1- 2 792 759
- US-A1- 2014 141 281
- YANG Y ET AL: "Multiphase equilibria in the metal-rich region of the Mo-Ti-Si-B system: thermodynamic prediction and experimental validation", ACTA MATERIALIA, ELSEVIER, OXFORD, GB, Bd. 53, Nr. 6, 1. April 2005 (2005-04-01), Seiten 1711-1720, XP027685334, ISSN: 1359-6454 [gefunden am 2005-04-01]
- YANG Y ET AL: "Effects of Ti, Zr, and Hf on the phase stability of Mo_ss+Mo3Si+Mo5SiB2 alloys at 1600<o>C", ACTA MATERIALIA, ELSEVIER, OXFORD, GB, Bd. 58, Nr. 2, 1. Januar 2010 (2010-01-01) , Seiten 541-548, XP026764997, ISSN: 1359-6454, DOI: 10.1016/J.ACTAMAT.2009.09.032 [gefunden am 2009-10-08]
- DANIEL SCHLIEPHAKE ET AL: "High-Temperature Creep and Oxidation Behavior of Mo-Si-B Alloys with High Ti Contents", METALLURGICAL AND MATERIALS TRANSACTIONS A, Bd. 45, Nr. 3, 23. August 2013 (2013-08-23), Seiten 1102-1111, XP055147279, ISSN: 1073-5623, DOI: 10.1007/s11661-013-1944-z
- M. A. AZIM ET AL: "Creep Resistance and Oxidation Behavior of Novel Mo-Si-B-Ti Alloys", JOM, 8. August 2015 (2015-08-08), XP055211964, ISSN: 1047-4838, DOI: 10.1007/s11837-015-1560-z

## Beschreibung

### HINTERGRUND DER ERFINDUNG

### GEBIET DER ERFINDUNG

Die vorliegende Erfindung betrifft ein Verfahren zur Herstellung eines Bauteils aus einem Verbundwerkstoff mit einer Metall - Matrix und eingelagerten intermetallischen Phasen, also aus einem sogenannten MIC - Verbundwerkstoff (MIC Metallic Intermetallic Composite) gemäß dem Oberbegriff von Anspruch 1. Ein gattungsgemäßes Verfahren ist zum Beispiel aus den Druckschriften US 2014/141281 A1 und EP 2 792 759 A1 bekannt. Darüber hinaus betrifft die vorliegende Erfindung ein entsprechendes Bauteil, insbesondere aus einer Molybdän - Legierung mit eingelagerten Siliziden.

### STAND DER TECHNIK

Bei Strömungsmaschinen, wie stationären Gasturbinen oder Flugtriebwerken, müssen die eingesetzten Werkstoffe abhängig vom Einsatzbereich hohe Anforderungen in verschiedenen Eigenschaftsbereichen erfüllen, wie beispielsweise möglichst geringes Gewicht bei gleichzeitiger hoher Festigkeit, Hochtemperaturbeständigkeit, Schwingungsfestigkeit usw.. Entsprechend besteht ein Bedarf, neue Werkstoffe zu entwickeln, die dem für den Einsatz in stationären Gasturbinen oder Flugtriebwerken anspruchsvollen Eigenschaftsprofil entsprechen. Allerdings sind Werkstoffe, die bei hohen Temperaturen hohe Festigkeiten aufweisen, häufig schwierig zu verarbeiten, sodass bei der Herstellung von entsprechenden Bauteilen hoher Aufwand und somit hohe Kosten entstehen. Dies liegt unter anderem häufig auch daran, dass derartige Werkstoffe nur eine geringe Verformbarkeit aufweisen, was die Bauteilfertigung erschwert.

Beispielsweise sind Molybdän - Legierungen mit Anteilen von Silizium und Bor sowie weiteren Legierungselementen, die intermetallische Phasen, wie Silizide, ausbilden, für den Einsatz in Hochtemperaturumgebungen interessant, da sie Schmelztemperaturen von über 2000°C aufweisen und geeignete mechanische Eigenschaften besitzen. Allerdings ist die Herstellung derartiger MIC - Werkstoffe auf Basis von Molybdän schwierig durchzuführen und sehr aufwändig.

So wurde bereits versucht, aus Pulvern, die jeweils aus einem chemischen Element der gewünschten Zusammensetzung bestehen, durch mechanisches Legieren Pulverpartikel zu erzeugen, die die gewünschte chemische Zusammensetzung des Werkstoffs aufweisen, um diese dann durch Verdichten und Sintern sowie heißisostatisches Pressen und Extrudieren zu einem entsprechenden Bauteil zu verarbeiten.

Allerdings ist das mechanische Legieren aufwändig und beim mechanischen Legieren, z.B. durch Mahlen, können durch die verwendeten Hilfsmittel, wie Mahlbehälter, Mahlkugeln, Mahlhilfsmittel und dergleichen, Fremdstoffe in das Pulver eingebracht werden, sodass der Werkstoff verunreinigt ist.

Darüber hinaus wurde versucht, aus reinen Elementpulvern, also Pulvern, die lediglich Partikel aus einem einzigen chemischen Element umfassen, durch Verdichten, anschließendes Sintern und Verdüsen eines entsprechenden Materialblocks wiederum Pulverpartikel zu erzeugen, die die gewünschte chemische Zusammensetzung aufweisen, um mit diesen Pulverpartikeln durch generative Herstellverfahren, wie selektives Laserschmelzen, oder durch Extrudieren oder durch eine klassische pulvermetallurgische Formgebung ein entsprechendes Bauteil zu erzeugen. Allerdings besteht auch bei diesen Verfahren das Problem, dass beim Verdüsen Verunreinigungen in das Material eingebracht werden können, z. B. durch Oxidation, Gaseinschlüsse und dergleichen. Außerdem ist auch dieses Verfahren mit den verschiedenen Verfahrensschritten des Mischens der Elementpulver, des Kompaktierens, Verbindens sowie Inertgasverdüsens und anschließender pulvermetallurgischer Formgebung mit Nachverdichtung sehr aufwändig.

Nur der Vollständigkeit halber sei zudem auch noch auf die folgenden Veröffentlichungen hingewiesen:
YANG Y ET AL: "Multiphase equilibria in the metal-rich region of the Mo-Ti-Si-B system: thermodynamic prediction and experimental validation", ACTA MATERIALIA, ELSEVIER, OXFORD, GB, Bd. 53, Nr. 6, 1. April 2005 (2005-04-01), Seiten 1711-1720, XP027685334, ISSN: 1359-6454
YANG Y ET AL: "Effects of Ti, Zr, and Hf on the phase stability of Mo_ss+Mo3Si+Mo5SiB2 alloys at 1600 oC", ACTA MATERIALIA, ELSEVIER, OXFORD, GB, Bd. 58, Nr. 2, 1. Januar 2010 (2010-01-01), Seiten 541-548, XP026764997, ISSN: 1359-6454, DOI: 10.1016/J.ACTAMAT.2009.09.032
DANIEL SCHLIEPHAKE ET AL: "High-Temperature Creep and Oxidation Behavior of Mo-Si-B Alloys with High Ti Contents", METALLURGICAL AND MATERIALS TRANSACTIONS A, Bd. 45, Nr. 3,23. August 2013 (2013-08-23), Seiten 1102-1111, XP055147279, ISSN: 1073-5623, DOI: 10.1007/s11661-013-1944-z
M. A. AZIM ET AL: "Creep Resistance and Oxidation Behavior of Novel Mo-Si-B-Ti Alloys", JOM, 8. August 2015 (2015-08-08), XP055211964, ISSN: 1047-4838, DOI: 10.1007/s11837-015-1560-z

### OFFENBARUNG DER ERFINDUNG

### AUFGABE DER ERFINDUNG

Es ist deshalb Aufgabe der vorliegenden Erfindung ein Verfahren zur Herstellung von Bauteilen aus sogenannten MIC - Werkstoffen (Verbundwerkstoffen aus einer Metall - Matrix und eingelagerten intermetallischen Phasen, sogenannten Metal Intermetallic Composite) und insbesondere aus Molybdän - Legierungen mit eingelagerten Siliziden bereitzustellen, bei welchem Verunreinigungen des Materials weitgehend vermieden oder zumindest verringert werden können und die Herstellung vereinfacht werden kann.

### TECHNISCHE LÖSUNG

Diese Aufgabe wird gelöst durch ein Verfahren mit den Merkmalen des Anspruchs 1 sowie ein Bauteil mit den Merkmalen des Anspruchs 13. Vorteilhafte Ausgestaltungen sind Gegenstand der abhängigen Ansprüche.

Die zugrunde liegende Idee der Erfindung besteht darin, darauf zu verzichten Pulver mit der gewünschten chemischen Zusammensetzung des herzustellenden Bauteils zu erzeugen, sodass bei den oben beschriebenen Verfahren des Standes der Technik auf das mechanische Legieren oder das Verdüsen verzichtet werden kann, sodass dadurch sowohl der Herstellungsprozess vereinfacht als auch eine Quelle für Verunreinigungen beseitigt werden kann.

Stattdessen wird vorgeschlagen, Pulver für die Herstellung eines entsprechenden Bauteils einzusetzen, die entweder aus den reinen chemischen Elementen bestehen und/oder durch Legierungen und/oder chemische Verbindungen und/oder Werkstoffverbunde gebildet sind und zusammen in ihrer chemischen Zusammensetzung derjenigen des Werkstoffs entsprechen, aus dem das herzustellende Bauteil gefertigt sein soll, wobei Schwund durch den Herstellungsprozess bereits berücksichtigt wird. Die eingesetzten Pulver und somit auch die Legierungspulver oder Pulver aus Werkstoffverbunden sind jedoch für sich unterschiedlich in ihrer chemischen Zusammensetzung zu derjenigen, die das herzustellende Bauteil aufweisen soll, sodass auf eine Pulverherstellung eines Pulvers mit der chemischen Zusammensetzung des gewünschten Werkstoffs und somit auf mechanisches Legieren oder Verdüsen verzichtet werden kann. Als Werkstoffverbunde kommen beispielsweise beschichtete Pulverpartikel in Betracht.

Es können zum Beispiel Pulver aus Reinmolybdän und/oder Molybdän - Legierungen, z.B. Legierungen mit Wolfram, Niob, Titan, Eisen, Zirkon, mit Silizidpulvem der Zusammensetzung Mo(Ti)5SiB2 und/oder Mo(Ti)5Si3 gemischt werden, wobei in den genannten intermetallischen Verbindungen das Molybdän teilweise durch Titan ersetzt werden kann, wie durch den Klammerausdruck angegeben ist. Ferner können wahlweise Yttrium und/oder Hafnium in den Molybdän - Legierungen enthalten sein. Alternativ können auch reine Elementpulver aus Molybdän, Silizium, Bor, Titan, Eisen, Zirkon, Wolfram und/oder Niob, sowie wahlweise Yttrium und/oder Hafnium, gemischt werden.

Erfindungsgemäß weist der aus den Pulvern herzustellenden Verbundwerkstoff folgende Zusammensetzung auf: 40 at.% bis 55 at.% Molybdän, vorzugsweise 45 at.% bis 52 at.% Molybdän; 5 at.% bis 20 at.% Silizium, vorzugsweise 8 at.% bis 15 at.% Silizium; 5 at.% bis 15 at.% Bor, vorzugsweise 7 at.% bis 10 at.% Bor; 20 at.% bis 40 at.% Titan, vorzugsweise 25 at.% bis 30 at.% Titan; 1 at.% bis 5 at.% Eisen, vorzugsweise 1 at.% bis 3 at.% Eisen; bis zu 5 at.% Yttrium, vorzugsweise bis zu 3 at.% Yttrium; bis zu 5 at.% Hafnium, vorzugsweise bis zu 3 at.% Hafnium; bis zu 5 at.% Zirkon, vorzugsweise bis zu 2 at.% Zirkon; bis zu 5 at.% Niob, vorzugsweise bis zu 2 at.% Niob; bis zu 1 at.% Wolfram, vorzugsweise bis zu 2 at.% Wolfram; sowie unvermeidliche Verunreinigungen. Eine solche Zusammensetzung der fertigen Mischung weist vorteilhafte Eigenschaften mit einem ausgewogenen Eigenschaftsprofil hinsichtlich Kriechbeständigkeit, statischer Festigkeit, Bruchzähigkeit, Duktilität, Oxidationsbeständigkeit und niedrigem spezifischen Gewicht auf.

Darüber hinaus wird vorgeschlagen die bereitgestellten Pulver zu verdichten, miteinander zu einer Einheit zu verbinden und eine entsprechende Einheit einer thermoplastischen Umformung zu unterziehen, wobei unter thermoplastischer Umformung die plastische Verformung der entsprechenden Einheit bei hohen Temperaturen verstanden wird, also Temperaturen, die üblicherweise oberhalb des Werts von einem Drittel der Schmelztemperatur, vorzugsweise oberhalb der Hälfte der Schmelztemperatur liegen. Durch diese Verfahrensschritte ist es möglich, aus den oben beschriebenen Pulvern ein Bauteil zu fertigen, welches eine homogene chemische Zusammensetzung der Metall - Matrix und ebenso homogene Verteilung der ausgeschiedenen intermetallischen Phasen sowie Porenfreiheit bei hoher Materialreinheit aufweist.

Die Schritte des Verdichtens und/oder des Verbindens der Pulver und/oder das thermoplastische Umformen der Einheit können in einem kombinierten Prozess oder in separaten Einzelschritten erfolgen.

Eine Kombination des Verdichtens der Pulver, des Verbindens der Pulver und des thermoplastischen Umformens kann beispielsweise durch Heißpressen mit einer mechanischen Presse realisiert werden, wobei die Pulvermaterialien vorzugsweise während des Heißpressens in einer evakuierten Kapsel aufgenommen sein können, die die Pulverpartikel umschließt. Dabei kann die verwendete Kapsel vorkonturiert sein, was vorteilhaft aber nicht zwingend ist. Bei einer Kombination von Verdichten und Verbinden der Pulver sowie teilweise der thermoplastischen Umformung können weiterhin Drucksintern und heißisostatisches Pressen Verwendung finden. Die Kombination einzelner Verfahrensschritte, also des Verdichtens, des Verbindens und der thermoplastischen Verformung, kann somit auch nur Teile dieser Schritte betreffen, also z.B. nur das Verdichten und Verbinden. Darüber hinaus können einzelne Schritte sowohl in einer Kombination als auch zusätzlich in Einzelschritten durchgeführt werden, wie beispielsweise zusätzlich zum Heißpressen ein nachfolgendes heißisostatisches Pressen.

Das Verdichten der Pulverpartikel in einem Einzelschritt kann durch Kaltpressen und insbesondere isostatisches Kaltpressen erfolgen.

Das Verbinden der Partikel nach einem vorangegangenen Verdichten kann durch Sintern erfolgen und zwar insbesondere in einer Schutzgasatmosphäre oder in einer reduzierenden Wasserstoff-Atmosphäre oder unter Vakuum.

Die thermoplastische Verformung von zu einer Einheit verdichteten und verbundenen Pulverpartikeln kann durch Heißpressen, Heißpressen von, ggf. vorkonturierten, evakuierten Kapseln mit der darin enthaltenen Einheit, heißisostatisches Pressen, Gesenkschmieden, isothermes Gesenkschmieden, Waimgesenkschmieden (hot die forging), Walzen, Hämmern, Strangpressen und Freiformschmieden erfolgen.

Vor dem Verdichten der Pulverpartikel können die verschiedenen, eingesetzten Pulver zusätzlich gemischt werden, um eine homogene Verteilung der verschiedenen Pulverpartikel zu erzielen. Das Mischen muss jedoch vom mechanischen Legieren unterschieden werden, bei dem beispielsweise durch entsprechende Mahlkörper zusätzliche Energie zum mechanischen Legieren eingebracht wird. Bei der vorliegenden Erfindung findet kein mechanisches Legieren statt, sondern lediglich eine homogene Durchmischung verschiedener, eingesetzter Pulver. Nach dem thermoplastischen Umformen, wenn somit bereits ein entsprechendes Halbzeug des Bauteils vorliegt, welches bereits auch sehr endkonturnah ausgebildet sein kann, kann eine Nachbearbeitung erfolgen, die eine Wärmebehandlung, eine mechanische Bearbeitung, eine Oberflächenbehandlung und/oder eine Beschichtung umfassen kann. Eine Oberflächenbehandlung kann beispielsweise eine Verfestigung etwa durch Walzen und/oder Strahlen sein. Insbesondere kann nach dem thermoplastischen Umformen eine Wärmebehandlung bei einer Temperatur im Bereich von 100°C bis 200°C unterhalb der Rekristallisationstemperatur erfolgen.

Vor der thermoplastischen Verformung kann mindestens eine Einheit, vorzugsweise können mehrere Einheiten und insbesondere mehrere Einheiten mit unterschiedlicher chemischer Zusammensetzung aufgeschmolzen und insbesondere schichtweise aufgeschmolzen werden, um nach dem erneuten Erstarren eine Einheit für die anschließende thermoplastische Verformung bereitzustellen. Durch ein schichtweises Aufschmelzen von Einheiten aus verdichtetem und verbundenem Pulver mit unterschiedlichen chemischen Zusammensetzungen kann ein gradierter Aufbau des Bauteils erreicht werden, sodass beispielsweise bei der Herstellung einer Turbinenschaufel der Schaufelfuß eine chemische Zusammensetzung aufweisen kann, die eine höhere Duktilität aufweist als die chemische Zusammensetzung, die im Schaufelblattbereich vorliegt, um dort eine bessere Kriechbeständigkeit zu erzielen.

Das Aufschmelzen der Einheiten kann in Elektronenstrahlöfen erfolgen.

Bei der Erstarrung kann die Abkühlung in einem Ofen mit eingestellten Temperaturgradienten erfolgen, sodass ein gerichtet erstarrtes Halbzeug mit anisotropen Eigenschaften erzeugt werden kann.

### KURZBESCHREIBUNG DER FIGUREN

Die beigefügten Zeichnungen zeigen in
- Fig. 1: ein Ablaufdiagramm einer ersten Ausführungsform,
- Fig. 2: ein Ablaufdiagramm einer zweiten Ausführungsform,
- Fig. 3: ein Ablaufdiagramm einer dritten Ausführungsform,
- Fig. 4: ein Ablaufdiagramm einer vierten Ausführungsform,
- Fig. 5: ein Ablaufdiagramm einer fünften Ausführungsform,
- Fig. 6: ein Ablaufdiagramm einer sechsten Ausführungsform,
- Fig. 7: ein Ablaufdiagramm einer siebten Ausführungsform,
- Fig. 8: ein Ablaufdiagramm einer achten Ausfiihrungsform,
- Fig. 9: ein Ablaufdiagramm einer neunten Ausführungsform.

### AUSFÜHRUNGSBEISPIELE

Weitere Vorteile, Kennzeichen und Merkmale der vorliegenden Erfindung werden bei der nachfolgenden, detaillierten Beschreibung von Ausführungsbeispielen deutlich, ohne dass die Erfindung auf diese Ausführungsbeispiele beschränkt ist.

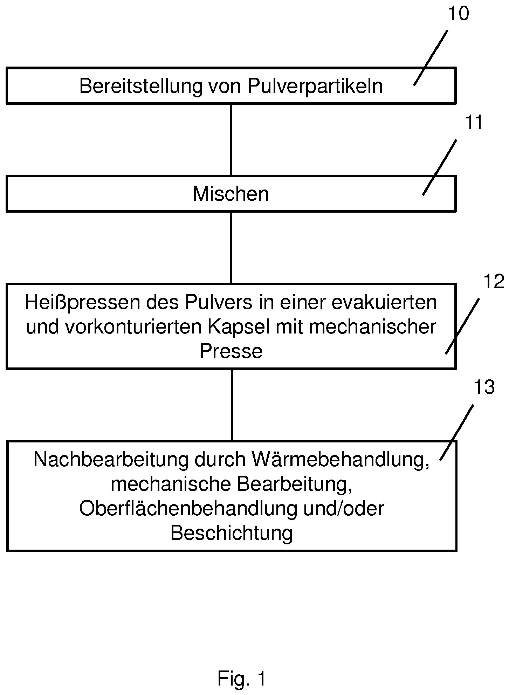

Bei der ersten Ausführungsform gemäß Fig. 1 werden Pulver aus reinen Elementpartikeln also Partikeln, die lediglich ein chemisches Element enthalten, Legierungspartikeln, die aus Legierungen gebildet sind, sowie beschichtete Partikel und/oder Partikel aus intermetallischen Phasen und/oder chemischen Verbindungen, die sich alle im Einzelnen von der chemischen Zusammensetzung des herzustellenden Bauteils unterscheiden, im entsprechenden Anteil bereitgestellt (Schritt 10), sodass zusammen unter Berücksichtigung von Schwunden während des Herstellungsverfahrens die chemische Zusammensetzung des herzustellenden Bauteils erreicht werden kann. Beispielsweise werden Pulver aus Reinmolybdän und/oder Molybdän - Legierungen, z.B. Legierungen mit Wolfram, Niob, Titan, Eisen, Zirkon, mit Silizidpulvem der Zusammensetzung Mo(Ti)5SiB2 und/oder Mo(Ti)5Si3 gemischt, wobei in den genannten intermetallischen Verbindungen das Molybdän teilweise durch Titan ersetzt werden kann, wie durch den Klammerausdruck angegeben ist. Ferner können auch wahlweise Yttrium und/oder Hafnium in den Molybdän - Legierungen enthalten sein. Alternativ können auch reine Elementpulver aus Molybdän, Silizium, Bor, Titan, Eisen, Zirkon, Wolfram und/oder Niob, sowie wahlweise Yttrium und/oder Hafnium, gemischt werden.

Vorteilhafte Eigenschaften der fertigen Mischung mit einem ausgewogenen Eigenschaftsprofil hinsichtlich Kriechbeständigkeit, statischer Festigkeit, Bruchzähigkeit, Duktilität, Oxidationsbeständigkeit und niedrigem spezifischen Gewicht wurden mit folgenden beispielhaften Zusammensetzungen erzielt (Angaben jeweils in at.%), die auch geringe Mengen an weiteren Elementen als unvermeidliche Verunreinigungen umfassen können:

| Molybdän | Silizium | Bor | Titan | Eisen | Yttrium | Zirkon | Niob | Wolfram |
|---|---|---|---|---|---|---|---|---|
| 495 | 12,5 | 8,5 | 27,5 | 2,0 | 0 | 0 | 0 | 0 |
| 48,5 | 13,5 | 8,5 | 26,5 | 2,0 | 0 | 1,0 | 0 | 0 |
| 51 | 10,0 | 8,5 | 27,5 | 2,0 | 0 | 1,0 | 0 | 0 |
| 46.5 | 12,5 | 8,5 | 27,5 | 2,0 | 2,0 | 1,0 | 0 | 0 |
| 46,5 | 12,5 | 8,5 | 27,5 | 2,0 | 2,0 | 0 | 1,0 | 0 |
| 46,5 | 12,5 | 8,5 | 27,5 | 2,0 | 2,0 | 0 | 0 | 1,0 |

Bei diesen Zusammensetzungen kann Yttrium wahlweise anteilig oder vollständig durch Hafnium ersetzt werden.

Diese Pulverpartikel werden gemischt (Schritt 11) und anschließend in eine Kapsel eingefüllt, die bereits ähnlich dem zu erzeugenden Bauteil vorkonturiert sein kann, also eine ähnliche Form aufweisen kann wie das herzustellende Bauteil. Die Vorkonturierung der Kapsel ist zwar häufig vorteilhaft, aber nicht zwingend. Stattdessen kann die Kapsel auch eine Form aufweisen, die noch nicht endkonturnah ist, z.B. eine Zylinderform, wenn das Endbauteil eine Schaufel sein soll. Die finale Form des Bauteils kann in einem solchen Fall durch einen nachgelagerten Verfahrensschritt, bei dem Material abgetragen wird, z.B. durch Erodieren oder Fräsen, erzielt werden.

Die Kapsel wird - abgesehen von den eingefüllten Pulverpartikeln, versteht sich -evakuiert, dann verschlossen und anschließend in einer mechanischen Presse einem Heißpressverfahren unterzogen (Schritt 12), bei dem sowohl das Verdichten des Pulvers als auch das Verbinden der Pulverpartikel untereinander und die thermoplastische Formgebung in einem Schritt erfolgen.

Anschließend kann das so hergestellte Bauteil einer Wärmebehandlung unterzogen werden, um das Gefüge in gewünschter Weise einzustellen und/oder Eigenspannungen zu beseitigen. Danach kann eine mechanische Nachbearbeitung erfolgen, bei der beispielsweise die Kapsel entfernt werden kann. Der mechanischen Bearbeitung können sich weitere Schritte der Oberflächenbehandlung und der Beschichtung mit Oxidationsschutzschichten und/oder Verschleißschutzschichten anschließen (Schritt 13).

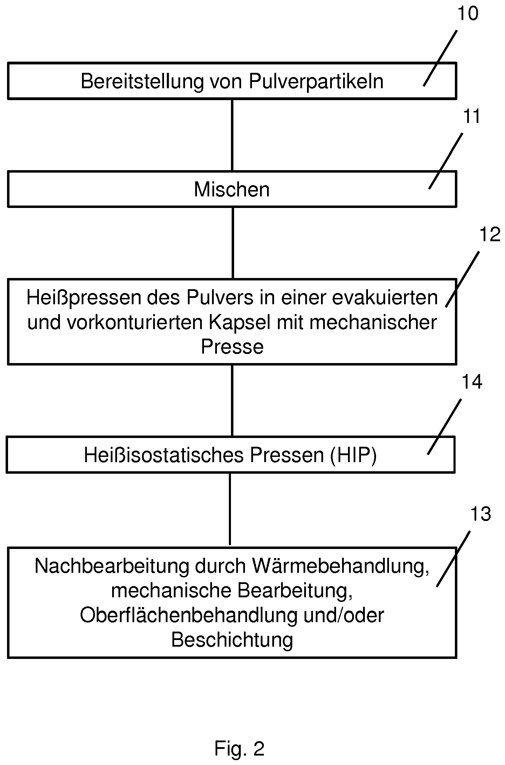

Bei einer weiteren Ausgestaltung der Erfindung kann der Verfahrensablauf, der in Fig. 2 dargestellt ist, ähnlich dem der vorgestellten, ersten Ausführungsform erfolgen, wobei zusätzlich bei der zweiten Ausführungsform ein weiterer Schritt des Nachverdichtens durch heißisostatisches Pressen (Schritt 14) erfolgen kann. Bei einer Molybdän - Legierung mit eingelagerten Siliziden kann dies beispielsweise bei einer Temperatur von 1500°C für vier Stunden erfolgen.

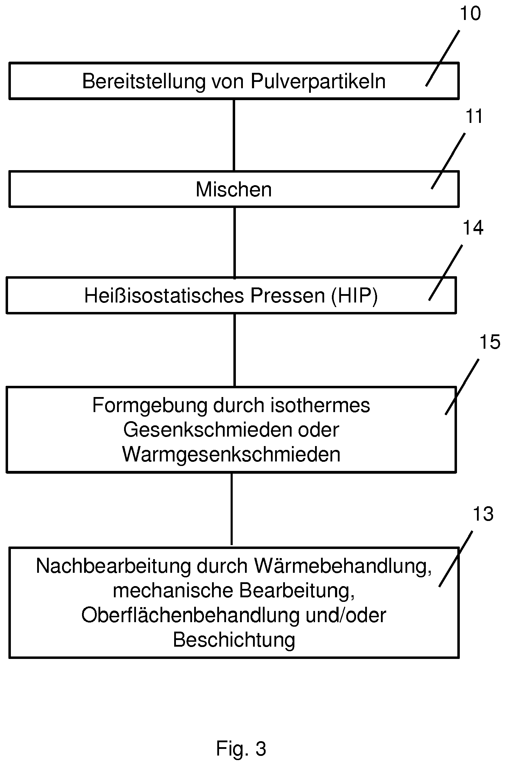

Bei der dritten Ausführungsform, deren Ablaufdiagramm in Fig. 3 gezeigt ist, wird das Heißpressen des Pulvers in einer evakuierten und ggf. vorkonturierten Kapsel durch heißisostatisches Pressen (Schritt 14) ersetzt, wobei zusätzlich eine thermoplastische Formgebung durch isothermes Gesenkschmieden oder Warmgesenkschmieden erfolgen kann (Schritt 15). Es ist auch denkbar, bei dem Verfahren gemäß dem Ablaufdiagramm in Fig. 3 auf das heißisostatische Pressen (Schritt 14) zu verzichten, und stattdessen die thermoplastische Formgebung ausschließlich durch isothermes Gesenkschmieden oder Warmgesenkschmieden zu verwirklichen.

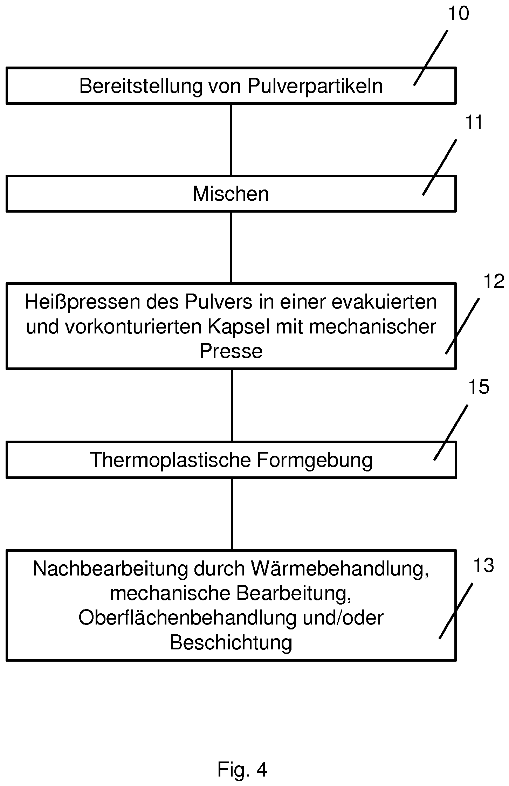

Bei einer vierten Ausführungsform (Fig. 4), die weitgehend derjenigen der ersten Ausführungsform entspricht, kann zusätzlich zum Heißpressen (Schritt 12) eine nachfolgende thermoplastische Formgebung durch Gesenkschmieden, isothermes Gesenkschmieden, Strangpressen, Hämmern, Freiformschmieden oder Walzen erfolgen (Schritt 15).

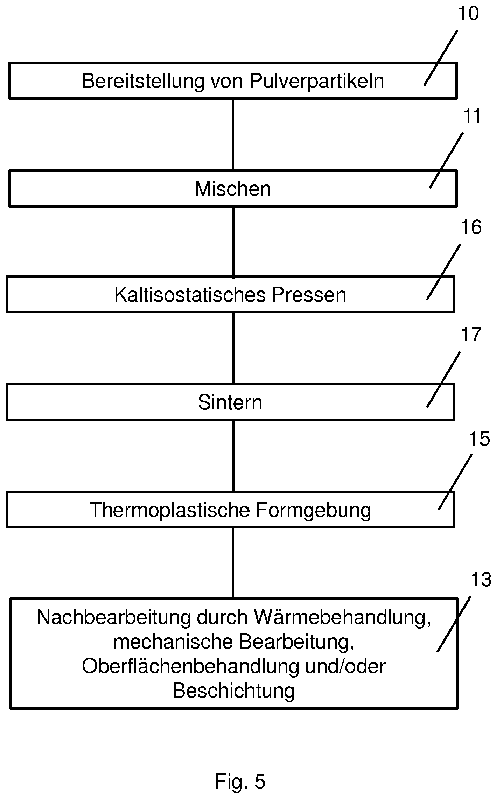

Bei der fünften Ausführungsform (Fig. 5), die sich bei der Bereitstellung der Pulver (Schritt 10) und dem Mischen der Pulver (Schritt 11) nicht von den vorangegangenen Ausführungsformen unterscheidet, werden die Schritte des Verdichtens und Verbindens der Pulverpartikel getrennt durchgeführt, und zwar einerseits durch kaltisostatisches Pressen (Schritt 16) und andererseits durch Sintern (Schritt 17). Eine dadurch erzeugte Einheit aus den Pulverpartikeln wird dann einer thermoplastischen Umformung (Schritt 15) in Form des Gesenkschmiedens (isothermes Gesenkschmieden oder Wamformgesenkschmieden) unterzogen. Alternativ oder zusätzlich kann die thermoplastische Umformung auch durch heißisostatisches Pressen, durch Hämmern, insbesondere Rundhämmern, Strangpressen, Freiformschmieden oder Walzen erfolgen.

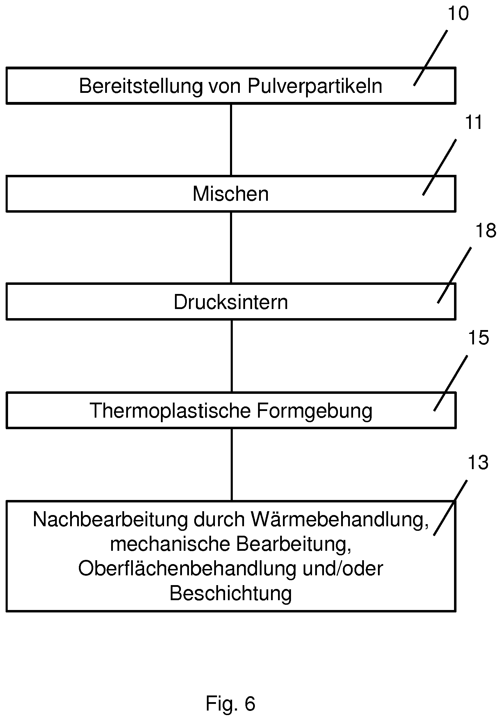

Bei einer sechsten Ausführungsform (Fig. 6) können die Schritte des Verdichtens und Verbindens der Pulver wieder in einem Schritt kombiniert werden und zwar durch Drucksintem (Schritt 18).

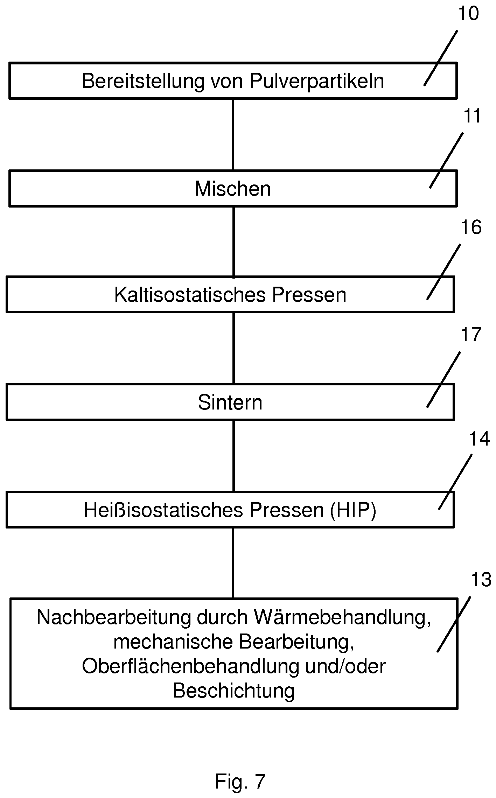

Bei der siebten Ausführungsform (Fig. 7) werden zunächst wieder wie bei der ersten Ausführungsform die zuvor bereitgestellten Pulver gemischt (Schritt 11). Nach dem Mischen werden die Pulver kaltgepresst (Schritt 16) und anschließend bei Temperaturen zwischen 1000°C und 1800°C in einer Wasserstoffatmosphäre gesintert (Schritt 17). Danach erfolgt ein heißisostatisches Pressen (HIP) bei 1200°C bis 1500°C für zwei bis sechs Stunden mit einem Druck von 100 bis 200 MPa (Schritt 14). Zusätzlich oder alternativ kann ein isothermes Gesenkschmieden oder ein Warmformgesenkschmieden sowie andere Formen der thermoplastischen Umformung wie Rundhämmem, Strangpressen, Freiformschmieden oder Walzen durchgeführt werden. Anschließend kann eine Wärmebehandlung bei bei einer Temperatur im Bereich von 100°C bis 200°C unterhalb der Rekristallisationstemperatur von fünf bis dreißig Stunden in einer Luftatmosphäre oder in einer inerten Atmosphäre durchgeführt werden und eine Abkühlung im Ofen erfolgen, sodass Eigenspannungen abgebaut werden und/oder entsprechende Gefügeeinstellungen vorgenommen werden können (Schritt 13). Je nach Werkstoff kann die Temperatur während der Wärmebehandlung zum Beispiel zwischen 1000°C und 1500°C liegen.

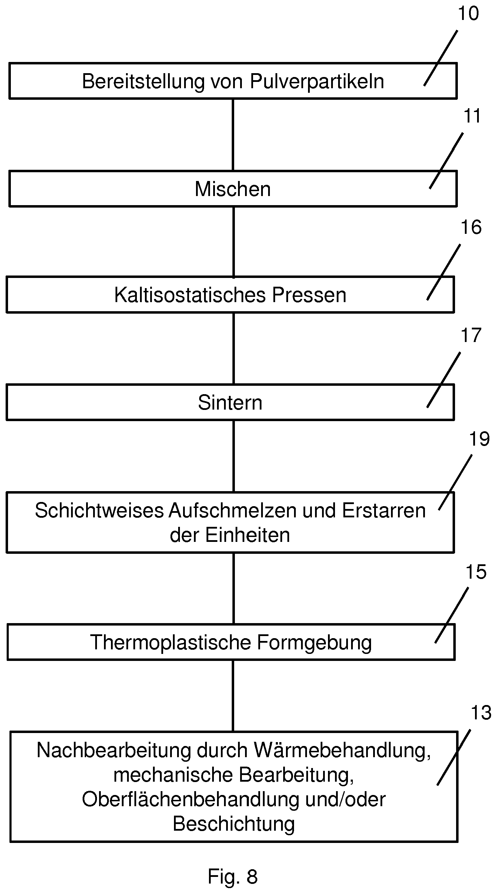

Bei einer weiteren Ausführungsform (Fig. 8) werden zunächst wieder die bereitgestellten Pulverpartikel gemischt, anschließend kaltgepresst (Schritt 16) und wiederum bei Temperaturen zwischen 1000°C und 1800°C in einer Wasserstoffatmosphäre gesintert (Schritt 17). Eine so erhaltene Materialeinheit wird mit anderen Einheiten, die eine unterschiedliche chemische Zusammensetzung aufweisen, so kombiniert, dass durch schichtweises Aufschmelzen in einem Elektronenstrahlofen mit anschließender Erstarrung ein Halbzeug entsteht, welches aufgrund der über dem Bauteil unterschiedlichen chemischen Zusammensetzung unterschiedliche Eigenschaften aufweist (Schritt 19). So kann ein Halbzeug erzeugt werden, das in einem Bereich eine bessere Duktilität als ein einem anderen Bereich aufweist, während umgekehrt in dem duktilen Bereich die Kriechfestigkeit geringer ist, als in dem nicht duktilen Bereich. Entsprechend könnte aus dem Halbzeug eine Turbinenschaufel gefertigt werden, bei der der duktile Bereich den Schaufelfuß bildet, und der kriechfeste Bereich das Schaufelblatt. Das entsprechende Halbzeug wird anschließend in einer thermoplastischen Verformung zu dem gewünschten Bauteil umgeformt (Schritt 15). Als Verfahren können wiederum Gesenkschmieden, Hämmern, Strangpressen, Freiformschmieden oder Walzen eingesetzt werden. Eine anschließende Wärmebehandlung (Schritt 13) kann mittels Induktionsspule in einer Luftatmosphäre oder in einer inerten Atmosphäre durchgeführt werden und zwar bei Temperaturen im Bereich von 100°C bis 200°C unterhalb der Rekristallisationstemperatur für fünf bis dreißig Stunden. Die Wärmebehandlung mit der Induktionsspule kann homogen über das gesamte Bauteil oder partiell bzw. mit einem Temperaturgradienten erfolgen. Eine partielle Wärmebehandlung kann auf die unterschiedlichen chemischen Zusammensetzungen des Bauteils abgestimmt sein.

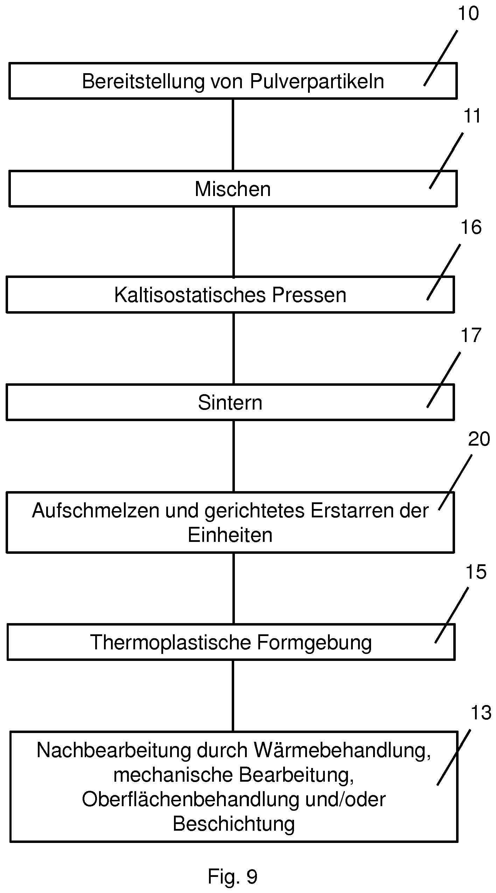

Bei einer weiteren Ausführungsform (Fig. 9) wird wiederum eine Einheit aus Elementpulvem durch Kaltpressen und Sintern in einer Wasserstoffatmosphäre bei Temperaturen zwischen 1000°C und 1800°C erzeugt. Danach wird die eine oder mehrere entsprechende Einheiten in einem Elektronenstrahlofen aufgeschmolzen und bei der Erstarrung im Ofen werden geeignete Temperaturgradienten eingestellt, sodass ein gerichtet erstarrtes Halbzeug mit anisotropen Eigenschaften entsteht (Schritt 20). Beispielsweise kann durch die eingestellte Anisotropie in einer Vorzugsrichtung die Kriechfestigkeit besonders gut ausgebildet sein, sodass diese Bauteilrichtung beim späteren Bauteil, wie beispielsweise einer Turbinenschaufel entsprechender Belastungsrichtung hinsichtlich der Kriechbelastung ausgerichtet wird.

Das so erzeugte Bauteil wird wiederum einer thermoplastischen Umformung und einer anschließenden Wärmebehandlung, wie sie bei den beiden vorangegangenen Ausführungsformen beschrieben worden sind, unterzogen.
Bei einer weiteren Ausführungsform wird wieder eine Einheit aus Elementpulvern durch Kaltpressen und Sintern bei Temperaturen zwischen 1000°C und 1800°C in einer Wasserstoffatmosphäre hergestellt. Auch bei dieser Ausführungsform werden die so hergestellten Einheiten in einem Elektronenstrahlofen aufgeschmolzen und anschließend einem thermoplastischen Verfahren sowie einer Wärmebehandlung unterzogen, wie sie in den vorangegangenen Ausführungsbeispielen beschrieben worden sind. Allerdingst erfolgt die Erstarrung nicht wie in dem vorangegangenen Ausführungsbeispiel als gerichtete Erstarrung sondern als homogene Erstarrung.
Durch die beschriebenen Verfahren und Ausführungsformen wird ein Herstellungsprozess für Bauteile aus Metall Intermetall Composites (MIC) und insbesondere Molybdän - Legierung mit eingelagerten intermetallischen Silizidverbindungen bereitgestellt, welches aufgrund der durchgeführten Verfahrensschritte eine geringere Anfälligkeit für Verunreinigungen und insbesondere für Gaseinschlüsse aufweist, was die Verformbarkeit des Werkstoffs verbessert. Die Vermeidung von Verunreinigungen, wie z.B. von Einschlüssen, erhöht weiterhin die Zuverlässigkeit und Lebensdauer des Bauteils. Dies wird auch durch die Verringerung der Porosität durch die thermoplastischen Umformungsprozesse erreicht, wobei zusätzlich die Zugfestigkeit durch die thermoplastische Umformung gesteigert werden kann. Insgesamt sind für die Herstellung entsprechende Werkstoffe weniger Prozessschritte erforderlich, die weniger aufwändig sind, sodass sich insbesondere ein vorteilhaftes Herstellungsverfahren ergibt.

## Patentansprüche

1. Verfahren zur Herstellung eines Bauteils aus einem Verbundwerkstoff mit einer Metall - Matrix und eingelagerten intermetallischen Phasen, welches folgende Schritte umfasst:
- Bereitstellung von Pulvern aus mindestens einer Komponente der Gruppe, die reine chemische Elemente, Legierungen, chemische Verbindungen und Werkstoffverbunde umfasst, wobei die Pulver insgesamt der chemischen Zusammensetzung entsprechen, die der herzustellende Verbundwerkstoff aufweisen soll, wobei jedes einzelne Pulver unterschiedlich zur chemischen Zusammensetzung des herzustellenden Verbundwerkstoffs ist,
- Verdichten der Pulver,
- Verbinden der Pulver untereinander zu einer Einheit und thermoplastisches Umformen der Einheit,
**dadurch gekennzeichnet, dass**
die Zusammensetzung des aus den Pulvern herzustellenden Verbundwerkstoffs wie folgt ist:
- 40 at.% bis 55 at.% Molybdän, vorzugsweise 45 at.% bis 52 at.% Molybdän,
- 5 at.% bis 20 at.% Silizium, vorzugsweise 8 at.% bis 15 at.% Silizium,
- 5 at.% bis 15 at.% Bor, vorzugsweise 7 at.% bis 10 at.% Bor,
- 20 at.% bis 40 at.% Titan, vorzugsweise 25 at.% bis 30 at.% Titan,
- 1 at.% bis 5 at.% Eisen, vorzugsweise 1 at.% bis 3 at.% Eisen,
- bis zu 5 at,% Yttrium, vorzugsweise bis zu 3 at.% Yttrium,
- bis zu 5 at.% Hafnium, vorzugsweise bis zu 3 at.% Hafnium,
- bis zu 5 at.% Zirkon, vorzugsweise bis zu 2 at.% Zirkon,
- bis zu 5 at.% Niob, vorzugsweise bis zu 2 at.% Niob,
- bis zu 1 at.% Wolfram, vorzugsweise bis zu 2 at.% Wolfram,
sowie unvermeidliche Verunreinigungen.

2. Verfahren nach Anspruch 1,
**dadurch gekennzeichnet, dass**
die Schritte des Verdichtens und/oder des Verbindens der Pulver und/oder das thermoplastische Umformen der Einheit in einem kombinierten Prozess oder in separaten Einzelschritten erfolgen.

3. Verfahren nach einem der vorhergehenden Ansprüche,
**dadurch gekennzeichnet, dass**
vor dem Verdichten der Pulver eine Mischung der Pulver erfolgt.

4. Verfahren nach einem der vorhergehenden Ansprüche,
**dadurch gekennzeichnet, dass**
nach dem thermoplastischen Umformen eine Nachbearbeitung erfolgt, die mindestens einen der Schritte umfasst, die in der Gruppe enthalten sind, die eine Wärmebehandlung, eine mechanische Nachbearbeitung, eine Oberflächenbehandlung und eine Beschichtung umfasst.

5. Verfahren nach einem der vorhergehenden Ansprüche,
**dadurch gekennzeichnet, dass**
die Pulver Elementpartikel, Legierungspartikel, beschichtete Partikel und/oder Partikel aus intermetallischen Phasen und/oder chemischen Verbindungen umfassen.

6. Verfahren nach einem der vorhergehenden Ansprüche,
**dadurch gekennzeichnet, dass**
die Metall - Matrix durch eine Molybdänlegierung gebildet wird, in der Silizide eingelagert sind.

7. Verfahren nach einem der vorhergehenden Ansprüche,
**dadurch gekennzeichnet, dass**
das Verdichten durch Kaltpressen erfolgt.

8. Verfahren nach einem der vorhergehenden Ansprüche,
**dadurch gekennzeichnet, dass**
das Verbinden durch Sintern erfolgt.

9. Verfahren nach einem der Ansprüche 1 bis 6,
**dadurch gekennzeichnet, dass**
das Verdichten und Verbinden der Pulver durch eine der Methoden aus der Gruppe erfolgt, die Drucksintern, Heißpressen, Heißpressen von, vorzugsweise vorkonturierten, evakuierten Kapseln und heißisostatisches Pressen umfasst.

10. Verfahren nach einem der vorhergehenden Ansprüche,
**dadurch gekennzeichnet, dass**
vor der thermoplastischen Verformung mindestens eine Einheit, vorzugsweise mehrere Einheiten mit unterschiedlicher chemischer Zusammensetzung aufgeschmolzen, insbesondere schichtweise aufgeschmolzen und wieder erstarrt werden, insbesondere gerichtet erstarrt werden.

11. Verfahren nach einem der vorhergehenden Ansprüche,
**dadurch gekennzeichnet, dass**
die thermoplastische Verformung durch eine der Methoden aus der Gruppe erfolgt, die Heißpressen, Heißpressen von, vorzugsweise vorkonturierten, evakuierten Kapseln, heißisostatisches Pressen, Gesenkschmieden, isothermes Gesenkschmieden, Warmgesenkschmieden, Walzen, Hämmern, Strangpressen und Freiformschmieden umfasst.

12. Verfahren nach einem der vorhergehenden Ansprüche,
**dadurch gekennzeichnet, dass**
nach dem thermoplastischen Umformen eine Wärmebehandlung bei einer Temperatur im Bereich von 100°C bis 200°C unterhalb der Rekristallisationstemperatur erfolgt.

13. Bauteil, insbesondere Bauteil einer Strömungsmaschine und insbesondere eines Flugtriebwerks hergestellt nach einem Verfahren nach einem der vorhergehenden Ansprüche.

## Claims

1. A method for producing a component made of a compound material with a metal - matrix and incorporated intermetallic phases, which comprises the following steps of:
- providing powders of at least one component from the group, which comprises pure chemical elements, alloys, chemical compounds and compound materials, wherein the powders as a whole correspond to the chemical composition, which should have the produced compound material,
wherein each individual powder is different from the chemical composition of the produced compound material,
- compressing the powders,
- bonding the powders among each other into a unit and thermoplastic deformation of the unit.
**characterized in that**
the composition of the compound material produced from the powders is as follows:
- 40 at.% to 55 at.% molybdenum, preferably 45 at.% to 52 at.% molybdenum,
- 5 at.% to 20 at.% silicon, preferably 8 at.% to 15 at.% silicon,
- 5 at.% to 15 at.% boron, preferably 7 at.% to 10 at.% boron,
- 20 at.% to 40 at.% titanium, preferably 25 at.% to 30 at.% titanium,
- 1 at.% to 5 at.% iron, preferably 1 at.% to 3 at.% iron,
- up to 5 at.% yttrium, preferably up to 3 at.% yttrium,
- up to 5 at.% hafnium, preferably up to 3 at.% hafnium,
- up to 5 at.% of zirconium, preferably up to 2 at.% zirconium,
- up to 5 at.% niobium, preferably up to 2 at.% niobium,
- up to 1 at.% tungsten, preferably up to 2 at.% tungsten,
- as well as inevitable impurities.

2. The method according to claim 1, **characterized in that**
the steps of the compression and/ or the bonding of the powders and/ or the thermoplastic deformation of the unit are carried out in a combined process or in separate steps.

3. The method according to any one of the preceding claims, **characterized in that** before the compression of the powders, a mixing of the powders is carried out.

4. The method according to any one of the preceding claims, **characterized in that** after the thermoplastic deformation, a post-processing is carried out, which comprises at least one of the steps that are included in the group, which comprises a heat treatment, a mechanical finishing process, a surface treatment and a coating process.

5. The method according to any one of the preceding claims, **characterized in that** it comprises the powder element particles, alloy particles, coated particles and/ or particles of intermetallic phases and/ or chemical compounds.

6. The method according to any one of the preceding claims, **characterized in that** the metal - matrix is formed by a molybdenum alloy, in which silicide is embedded.

7. The method according to any one of the preceding claims, **characterized in that** the compression is carried out by cold pressing.

8. The method according to any one of the preceding claims, **characterized in that** the bonding is carried out by sintering.

9. The method according to any one of claims 1 to 6, **characterized in that** the compression and bonding of the powders are carried out by one of the methods from the group which comprises pressure sintering, hot pressing, hot pressing of, preferably pre-contoured, evacuated capsule, and hot isostatic pressing.

10. The method according to any one of the preceding claims, **characterized in that** before the thermoplastic deformation, at least one unit, preferably several units with different chemical compositions are melted, in particular melted in layers and re-solidified, in particular directionally solidified.

11. The method according to any one of the preceding claims, **characterized in that** the thermoplastic deformation is carried out by one of the methods from the group, which comprises hot pressing, hot pressing of, preferably pre-contoured, evacuated capsules, hot isostatic pressing, drop forging, isothermal drop forging, hot drop forging, rolling, hammering, extrusion pressing and open die forging.

12. The method according to any one of the preceding claims, **characterized in that** after the thermoplastic deformation, a heat treatment is carried out below the recrystallization temperature, at a temperature ranging from 100 °C to 200 °C.

13. A component, in particular, the component of a turbomachine, and in particular, an aircraft engine manufactured by the method according to any one of the preceding claims.

## Revendications

1. Procédé de fabrication d'une pièce de construction en un matériau composite ayant une matrice métallique et des phases intermétalliques incorporées, qui comprend les étapes suivantes :
- préparation de poudres d'au moins un composant du groupe comprenant des éléments chimiques purs, des alliages, des composés chimiques et des matériaux composites, les poudres correspondant globalement à la composition chimique que doit avoir le matériau composite à fabriquer, chaque poudre étant distincte de la composition chimique du matériau composite à fabriquer,
- compactage des poudres
- agglomération des poudres entre elles en une seule unité et transformation thermoplastique de l'unité,
**caractérisé en ce que** la composition du matériau composite à fabriquer à partir des poudres est la suivante :
- de 40 à 55 % en moles de molybdène, de préférence de 45 à 52 % en moles de molybdène,
- de 5 à 20 % en moles de silicium, de préférence de 8 à 15 % en moles de silicium,
- de 5 à 15 % en moles de bore, de préférence de 7 à 10 % en moles de bore,
- de 20 à 40 % en moles de titane, de préférence de 25 à 30 % en moles de titane,
- de 1 à 5 % en moles de fer, de préférence de 1 à 3 % en moles de fer,
- jusqu'à 5 % en moles d'yttrium, de préférence jusqu'à 3 % en moles d'yttrium,
- jusqu'à 5 % en moles de hafnium, de préférence jusqu'à 3 % en moles de hafnium,
- jusqu'à 5 % en moles de zirconium, de préférence jusqu'à 2 % en moles de zirconium,
- jusqu'à 5 % en moles de niobium, de préférence jusqu'à 2 % en moles de niobium,
- jusqu'à 1 % en moles de tungstène, de préférence jusqu'à 2 % en moles de tungstène,
ainsi que des impuretés inévitables.

2. Procédé selon la revendication 1, **caractérisé en ce que** les étapes de compactage et/ou d'agglomération des poudres et/ou la transformation thermoplastique de l'unité se font dans un procédé combiné ou par étapes unitaires séparées.

3. Procédé selon une des revendications précédentes, **caractérisé en ce qu'**un mélange des poudres a lieu avant leur compactage.

4. Procédé selon une des revendications précédentes, **caractérisé en ce qu'**un post-traitement a lieu après la transformation thermoplastique, ledit post-traitement comprenant une des étapes contenues dans le groupe qui se compose d'un traitement thermique, d'un post-traitement mécanique, d'un traitement de surface et d'un revêtement.

5. Procédé selon une des revendications précédentes, **caractérisé en ce que** les poudres contiennent des particules d'un élément pur, des particules d'alliage, des particules enrobées et/ou des particules de phases intermétalliques et/ou de composés chimiques.

6. Procédé selon une des revendications précédentes, **caractérisé en ce que** la matrice métallique est formée d'un alliage de molybdène dans lequel sont intégrées des siliciures.

7. Procédé selon une des revendications précédentes, **caractérisé en ce que** le compactage se fait par compression à froid.

8. Procédé selon une des revendications précédentes, **caractérisé en ce que** l'agglomération se fait par frittage.

9. Procédé selon une des revendications 1 à 6, **caractérisé en ce que** le compactage et l'agglomération des poudres se fait par un des procédés du groupe comprenant le frittage sous pression, le compactage à chaud, le compactage à chaud de capsules sous vide, de préférence pré-contourées, et le compactage isostatique à chaud.

10. Procédé selon une des revendications précédentes, **caractérisé en ce qu'**avant la transformation thermoplastique, au moins une unité, de préférence plusieurs unités de compositions chimiques différentes sont fondues, en particulier fondues couche par couche et resolidifiées, en particulier resolidifiées avec solidification directionnelle.

11. Procédé selon une des revendications précédentes, **caractérisé en ce que** la transformation thermoplastique se fait par un des procédés du groupe comprenant le compactage à chaud, le compactage à chaud de capsules sous vide, de préférence pré-contourées, le compactage isostatique à chaud, l'estampage, l'estampage isotherme, l'estampage à chaud, le laminage, le martelage, l'extrusion et le forgeage libre.

12. Procédé selon une des revendications précédentes, **caractérisé en ce qu'**après la transformation thermoplastique a lieu un traitement thermique à une température dans la gamme de 100°C à 200°C sous la température de recristallisation.

13. Pièce de construction, en particulier pièce de construction d'une turbomachine, et en particulier d'un moteur d'avion, fabriquée selon un procédé selon une des revendications précédentes.
